(19) Europäisches Patentamt
European Patent Office
Office européen des brevets

(11) **EP 0 938 987 B1**

(12) **EUROPÄISCHE PATENTSCHRIFT**

(45) Veröffentlichungstag und Bekanntmachung des Hinweises auf die Patenterteilung:
**15.09.2004 Patentblatt 2004/38**

(51) Int Cl.⁷: **B60C 23/04**, B60C 23/06

(21) Anmeldenummer: **99101820.1**

(22) Anmeldetag: **28.01.1999**

(54) **Verfahren und Vorrichtung zur Überwachung des Reifenluftdrucks von Rädern eines Kraftfahrzeuges**

Method and apparatus for monitoring the tyre pressure of motor vehicle wheels

Méthode et appareil de surveillance de la pression des pneumatiques d'un véhicule automobile

(84) Benannte Vertragsstaaten:
**DE FR GB IT NL SE**

(30) Priorität: **25.02.1998 DE 19807880**

(43) Veröffentlichungstag der Anmeldung:
**01.09.1999 Patentblatt 1999/35**

(73) Patentinhaber: **DaimlerChrysler AG**
**70567 Stuttgart (DE)**

(72) Erfinder:
• **Borenius, Gunnar, Dr.**
**73773 Aichwald (DE)**
• **Braun, Fritz**
**71394 Kernen (DE)**
• **Grünberg, Heiko**
**31303 Otze (DE)**

(56) Entgegenhaltungen:
**EP-A- 0 773 118**          **DE-A- 4 400 913**

EP 0 938 987 B1

**Beschreibung**

Die Erfindung bezieht sich auf ein Verfahren und eine Vorrichtung zur Überwachung des Reifenluftdrucks von Rädern eines Kraftfahrzeuges nach dem Oberbegriff des Anspruchs 1 bzw. 6, speziell auf ein solches Verfahren und eine solche Vorrichtung, bei denen wenigstens für einen Teil der Fahrzeugräder der Reifenluftdruck, nachfolgend auch kurz Reifendruck bezeichnet, nicht direkt mittels einer entsprechenden Reifenluftdrucksensorik, sondern indirekt ermittelt wird.

Es sind bereits verschiedentlich Verfahren und Vorrichtungen zur indirekten Bestimmung des Reifendrucks von Fahrzeugrädern bekannt geworden, siehe die Patentschrift DE 43 27 492 C1 und den dort genannten Stand der Technik. Bei diesen bekannten Verfahren und Vorrichtungen ist die Reifendruckermittlung meist auf sehr spezielle, insbesondere weitestgehend antriebskraftfreie Fahrzustände beschränkt. So ist bei dem in der DE 43 27 492 C1 vorgeschlagenen Reifendruckwarnverfahren vorgesehen, den Reifendruck indirekt aus einem Raddrehzahlabgleich und entsprechenden Raddrehzahlskalierungsfaktoren abzuleiten und dabei die zugrundeliegenden Raddrehzahlen nur während Fahrzuständen zu messen, in denen das Antriebsmoment unterhalb eines vorgegebenen Antriebsmoment-Grenzwertes liegt und spezielle weitere Bedingungen erfüllt sind. Konkret werden bei diesem bekannten Verfahren nur praktisch antriebskraftfreie Fahrzustände berücksichtigt, bei denen das Fahrzeug quasi antriebskraftfrei rollt und zudem keine merkliche Kurvenfahrt vorliegt. Diese Vorgehensweise kann dazu führen, daß für längere Zeit, wenn beispielsweise an Steigungen oder bei schnellerer Autobahnfahrt ständig Antriebskräfte wirken, keine Reifendrucküberwachung erfolgt.

Ein Verfahren und eine Vorrichtung der eingangs genannten Art sind in der Offenlegungsschrift DE 44 00 913 A1 beschrieben. Beim dortigen Verfahren werden zur Ermittlung eines Fülldruckverlusts in einem Reifen eines angetriebenen Rades die Radumdrehungsgeschwindigkeiten gemessen und daraus Schlupfwerte für die angetriebenen Räder berechnet. Außerdem werden die zugehörigen Radantriebskräfte bestimmt und mit den Schlupfwerten als Kraft-Schlupf-Meßwertpaare in Relation gesetzt. Zu den Meßwertpaaren wird eine Ausgleichskurve, vorzugsweise in Form einer Regressionsgeraden, ermittelt. Aus der Steigung der Regressionsgeraden wird dann auf den Reifendruck geschlossen, und zwar mit zunehmender Kennliniensteigung auf abnehmenden Reifendruck.

Der Erfindung liegt als technisches Problem die Bereitstellung eines Verfahrens und einer Vorrichtung zugrunde, mit denen sich der Reifenluftdruck von Kraftfahrzeugrädern mit relativ geringem Aufwand indirekt und möglichst kontinuierlich bestimmen und damit überwachen läßt, insbesondere auch während Fahrzuständen, in denen Antriebskräfte an den Rädern wirksam sind.

Die Erfindung löst dieses Problem durch die Bereitstellung eines Verfahrens mit den Merkmalen des Anspruchs 1 sowie einer Vorrichtung mit den Merkmalen des Anspruchs 6.

Beim Verfahren nach Anspruch 1 werden für wenigstens ein angetriebenes Rad laufend der Schlupf und die zugehörige Reifenumfangskraft, auch Reifenlängskraft genannt, in Form jeweiliger Reifenumfangskraft-Schlupf-Meßwertpaare erfaßt, und es wird wenigstens zu einem ausgewählten Teil dieser erfaßten Meßwertpaare eine Ausgleichskurve sowie deren Offsetwert bezüglich des Nullpunktes im Reifenumfangskraft-Schlupf-Kennfeld ermittelt. Aus diesem Offsetwert wird dann auf das zugehörige Radradienverhältnis zwischen dem wenigstens einen angetriebenen Rad und einem nicht angetriebenen Rad geschlossen und daraus der relative Reifenluftdruck der Räder bestimmt. Diese Vorgehensweise ist mit relativ geringem Aufwand realisierbar, insbesondere auch deshalb, weil die zur Schlupf- und Reifenumfangskrafterfassung benötigten Informationen, z.B. über Raddrehzahlen, Motordrehzahl und -moment sowie Fahrgeschwindigkeit, bei modernen Fahrzeugen ohnehin vorhanden sind, beispielsweise für ein Antiblockiersystem. Dadurch wird eine relative Reifenluftdruckinformation zwischen einem angetriebenen und einem nicht angetriebenen Rad ohne Verwendung eines Drucksensors gewonnen.

Bei einem nach Anspruch 2 weitergebildeten Verfahren werden spezifisch diejenigen Reifenumfangskraft-Schlupf-Meßwertpaare zur Ermittlung der Ausgleichskurve herangezogen, die in einem Mikroschlupfbereich liegen. In diesem Bereich ist der funktionale Zusammenhang zwischen Reifenumfangskraft und Schlupf erfahrungsgemäß in sehr guter Näherung linear, weshalb als Ausgleichskurve eine Gerade angesetzt wird. Diese kann beispielsweise anhand von zwei Meßwertpaaren oder als eine Regressionsgerade für mehr als zwei Meßwertpaare definiert werden.

In einer Weiterbildung der Erfindung nach Anspruch 3 erfolgt die verfahrensgemäße relative Reifenluftdruckbestimmung sowohl für die jeweils seitengleichen als auch für die diagonal gegenüberliegenden Radpaare, wodurch eine höhere Sicherheit der Reifenluftdruckbestimmung erzielt wird.

Bei einem nach Anspruch 4 weitergebildeten Verfahren wird an wenigstens einem Rad der absolute Reifenluftdruck durch eine zugeordneten Drucksensorik direkt bestimmt. Dieser direkt ermittelte Druckwert wird dann als Referenzdruckwert für den für wenigstens ein anderes Rad ermittelten relativen Reifenluftdruckwert benutzt. Damit ist es z.B. unter Verwendung nur eines Drucksensors an einem Rad möglich, den absoluten Reifenluftdruck für alle Räder eines Kraftfahrzeugs zu bestimmen.

Bei einem nach Anspruch 5 weitergebildeten Verfahren wird zusätzlich die Steigung der ermittelten Ausgleichskurve bestimmt und daraus auf die vorhandene Radlast geschlossen.

Die Vorrichtung nach Anspruch 6 eignet sich zur Durchführung des erfindungsgemäßen Verfahrens. Die nach Anspruch 7 weitergebildete Vorrichtung eignet sich speziell zur Durchführung des Verfahrens nach Anspruch 4.

Eine vorteilhafte Ausführungsform der Erfindung ist in den Zeichnungen dargestellt und wird nachfolgend beschrieben. Hierbei zeigen:

Fig. 1   ein Blockdiagramm einer Vorrichtung zur Reifenluftdrucküberwachung von Rädern eines Kraftfahrzeuges,

Fig. 2   ein detaillierteres Blockdiagramm eines in Fig. 1 verwendeten Schlupfrechners,

Fig. 3   ein Ausschnitt aus einem Reifenumfangskraft-Schlupf-Kennfeld im Mikroschlupfbereich mit aufgenommenen Meßwertpaaren und linearer Regressionsgerade zur indirekten relativen Reifenluftdruckermittlung durch die Vorrichtung von Fig. 1 und

Fig. 4   ein Blockdiagramm eines in einem Auswerterechner von Fig. 1 implementierbaren Kalman-Filters zur Ausgleichskurvenbestimmung.

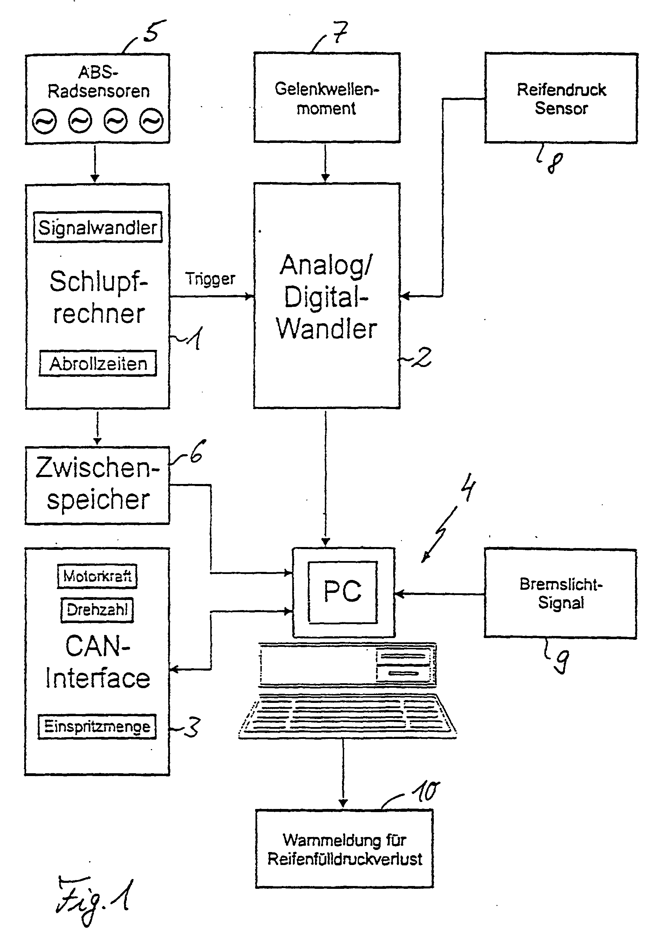

Fig. 1 zeigt eine Vorrichtung zur Überwachung des Reifenluftdrucks, nachfolgend kurz Reifendruck bezeichnet, von Rädern eines mit einem Antiblockiersystem ausgerüsteten Automobils. Die Reifendruckbestimmung erfolgt für wenigstens ein Rad indirekt anhand erfaßter Reifenumfangskraft-Schlupf-Meßwertpaare. Der hierzu verwendeten Vorgehensweise liegen folgende Überlegungen und Festlegungen zugrunde. Der Schlupf $\lambda$ wird definiert als das Verhältnis der Differenz der Radumfangsgeschwindigkeit zwischen einem angetriebenen und einem nicht angetriebenen Rad zur Radumfangsgeschwindigkeit des angetriebenen Rades. Mit den Bezeichnungen $r_a$ für den Radius des angetriebenen Rades, $r_n$ für den Radius des nicht angetriebenen Rades, $t_a$ für die Zeitdauer einer Umdrehung des angetriebenen Rades sowie $t_n$ für die Zeitdauer einer Umdrehung des nicht angetriebenen Rades gilt dann für den Schlupf $\lambda$ die Beziehung

$$\lambda = 1 - k t_a / t_n,$$

mit dem sogenannten Kalibrierfaktor $k = r_n / r_a$, d.h. der Kalibrierfaktor $k$ gibt das Radradienverhältnis des nicht angetriebenen Rades zum angetriebenen Rad an. Alternativ sind auch andere, ähnliche Definitionen des Schlupfes $\lambda$ gängig, wobei in jedem Fall in diese Beziehung zusätzlich zu den Umdrehungsdauern $t_a$, $t_n$ der Kalibrierfaktor $k$ eingeht. Da am angetriebenen Rad per definitionem der Schlupf $\lambda$ gleich null sein sollte, wenn keine Antriebskraft anliegt, sollte die Reifenumfangskraft-Schlupf-Kennlinie durch den Nullpunkt des entsprechenden Reifenumfangskraft-Schlupf-Kennfeldes gehen. Eine Abweichung von dieser Gesetzmäßigkeit läßt folglich auf eine Fehlbestimmung des wahren Schlupfes, d.h. des von der Antriebskraft und damit der Reifenumfangskraft bedingten Schlupfes, aufgrund fehlerhafter Annahmen über die Radien $r_a$, $r_n$ der betreffenden Räder, d.h. über den Kalibrierfaktor $k$ schließen. Daher läßt sich aus dem Offsetwert der Reifenumfangskraft-Schlupf-Kennlinie, z.B. in Form von deren Schlupfwert bei Reifenumfangskraft null, ein neuer Kalibrierfaktor $k$ ermitteln, bei dessen Verwendung in der obigen Beziehung für den Schlupf $\lambda$ dann die Reifenumfangskraft-Schlupf-Kennlinie wie gewünscht durch den Kennfeldnullpunkt geht. Der neu ermittelte Kalibrierfaktor gibt dann das wahre Radradienverhältnis wieder. Da letzteres unmittelbar mit dem relativen Reifenluftdruck der beiden beteiligten Räder zusammenhängt, kann aus dem neu ermittelten Kalibrierfaktor der relative Reifenluftdruck dieser Räder bestimmt werden, wodurch es insbesondere möglich ist, einen übermäßigen Druckabfall an einem der beiden Räder frühzeitig zu erkennen.

Während bei den meisten anderen, herkömmlichen Vorgehensweisen, bei denen der Reifendruck indirekt aus Raddrehzahl- bzw. Radwinkelgeschwindigkeitsmessungen abgeleitet wird, nur weitestgehend antriebskraftfreie Fahrsituationen genutzt werden können, werden bei der vorliegenden Vorgehensweise gerade auch Fahrsituationen mit von null verschiedener Antriebskraft berücksichtigt. Denn die Ermittlung der Radumfangskraft-Schlupf-Kennlinie ist umso zuverlässiger, je größer der Schlupf- und der Reifenumfangskraft-Meßwertbereich ist, in welchem entsprechende Meßwertpaare vorliegen. Während die genannten herkömmlichen Methoden Zustände mit Antriebskraft- und Schlupfschwankungen ausblenden, verbessern solche Schwankungen beim vorliegenden, erfindungsgemäßen Verfahren die Genauigkeit der Neubestimmung des Kalibrierfaktors und damit des relativen Reifendrucks der Räder.

Die Vorrichtung von Fig. 1 eignet sich zur Durchführung des erfindungsgemäßen Verfahrens. Sie beinhaltet vier vernetzte Einzelrechner, und zwar einen Schlupfrechner 1, einen intelligenten Analog/Digital-Wandler 2, eine intelligente Schnittstellenkarte 3 zur Erfassung der Motordaten des das Kraftfahrzeug antreibenden Motors und einen Leitrechner 4, der als Auswerteeinheit fungiert. Der Leit- bzw. Auswerterechner 4 ist dabei so dimensioniert, daß er zusammen mit den anderen Vorrichtungskomponenten problemlos in einem Automobil oder einem anderen Kraftfahrzeug als Teil der Fahrzeugelektronik mitgeführt werden kann. Der Schlupfrechner 1 wertet die Ausgangssignale einer Antiblockiersystem-Raddrehzahlsensorik 5 zwecks Ermittlung der Abrollzeiten für eine Radumdrehung, d.h. der Umdrehungsdauer, der Fahrzeugräder aus. Die Abrollzeiten lassen sich unter Berücksichtigung des aktuellen Rollradienverhältnisses, d.h. des Kalibrierfaktors k, direkt mit hoher Genauigkeit in zugehörige Schlupfwerte λ umrechnen. Der Schlupfrechner 1 übergibt die ermittelten Zahlenwerte über einen Zwischenspeicher 6 direkt an den Auswerterechner 4.

Zur Erfassung der Reifenumfangskraft ist eine Gelenkwellenmomentsensorik 7 vorgesehen, die mittels Dehnungsmeßstreifen das Gelenkwellenmoment erfaßt und über den A/D-Wandler 2 dem Auswerterechner 4 zuführt. Dabei wird die Reifenumfangskraft aus dem sensierten Gelenkwellenmoment unter Kenntnis der Differentialgetriebeübersetzung und des statischen Abrollradius ermittelt, wobei vorausgesetzt wird, daß die Momentenverteilung des Ausgleichsgetriebes stets gleich ist. Zweckmäßigerweise werden die pro Radumdrehung erhaltenen, digitalisierten Gelenkwellenmomentwerte zur Bildung eines Kraftwertes für jede Radumdrehung gemittelt. Parallel dazu übermittelt die Schnittstellenkarte 3 Daten über die aktuellen Werte des Motormoments, der Motordrehzahl und der Einspritzmenge an den Auswerterechner 4, der anhand dieser Daten indirekt auf die Reifenumfangskraft schließen kann. Die Ermittlung der Radantriebskraft und damit der Reifenumfangskraft aus dem Motormoment benötigt dabei die Kenntnis über die momentane Getriebegesamtübersetzung. Diese läßt sich aus der vom Schlupfrechner 1 ermittelten Abrollzeit der angetriebenen Räder und der zugehörigen Motordrehzahlinformation ableiten. Somit wird die Reifenumfangskraft unabhängig voneinander auf zwei Weisen ermittelt, was dazu genutzt werden kann, die Genauigkeit der Reifenumfangskraftermittlung zu erhöhen, indem z.B. ein Mittelwert gebildet wird, oder diesbezüglich eine Redundanz bereitzustellen. Wenn sich die indirekte Reifenumfangskraftbestimmung über die Motordaten von der Schnittstellenkarte 3 als ausreichend genau und zuverlässig erweist, kann bei Bedarf auch auf die Gelenkwellenmomentsensorik 7 verzichtet werden. Umgekehrt kann in Fällen, in denen die Schnittstellenkarte 3 nicht vorhanden ist, die Reifenumfangskraft allein über die Gelenkwellenmomentsensorik 7 bestimmt werden.

Optional ist eine Reifendrucksensorik 8 vorgesehen, mit welcher der Reifendruck eines Teils der Fahrzeugräder, z.B. an genau einem Rad, absolut gemessen werden kann. Die Drucksensorik 8 übermittelt die entsprechende Druckinformation über den A/D-Wandler 2 an den Auswerterechner 4. Die Drucksensorik 8 kann dabei laufend eingesetzt werden, um an wenigstens einem Fahrzeugrad den absoluten Reifendruck zu erfassen, wobei dieser absolute Druckwert dann als Referenzwert dienen kann, anhand dessen für die übrigen Räder aus dem wie oben beschrieben ermittelten relativen Reifendruck der absolute Reifendruck abgeleitet werden kann. Dies erlaubt dann eine absolute Reifendruckbestimmung für alle Räder mittels eines Drucksensors an z.B. nur einem Rad. Alternativ kann die Reifendrucksensorik 8 auch nur dazu eingesetzt werden, die auf der Reifenumfangskraft-Schlupf-Erfassung basierende relative Reifendruckermittlung anfänglich oder von Zeit zu Zeit zu überprüfen bzw. zu kalibrieren, indem für eines oder mehrere Räder der Reifendruck sowohl indirekt und relativ über die Radumfangskraft-SchlupfErfassung als auch direkt und absolut über die Reifendrucksensorik 8 bestimmt wird. Für derartige Überprüfungsvorgänge kann zusätzlich eine Luftdruckregeleinheit vorgesehen sein, mit der sich der Reifendruck definiert verändern läßt und welche die entsprechenden Informationen an den Auswerterechner 4 abgibt.

Damit der Auswerterechner 4 Fahrzustände erkennen kann, in denen ein Bremsvorgang aktiv ist, wird ihm von einer Bremslichtsignaleinheit 9 eine entsprechende Bremslichtsignalinformation zugeführt.

Der Auswerterechner 4 ist so ausgelegt, daß er anhand der empfangenen Eingangsdaten einen Reifenfülldruckverlust in einem der Fahrzeugräder rechtzeitig zu erkennen vermag und in diesem Fall in üblicher Weise eine akustische oder optische Warnmeldung 10 abgibt.

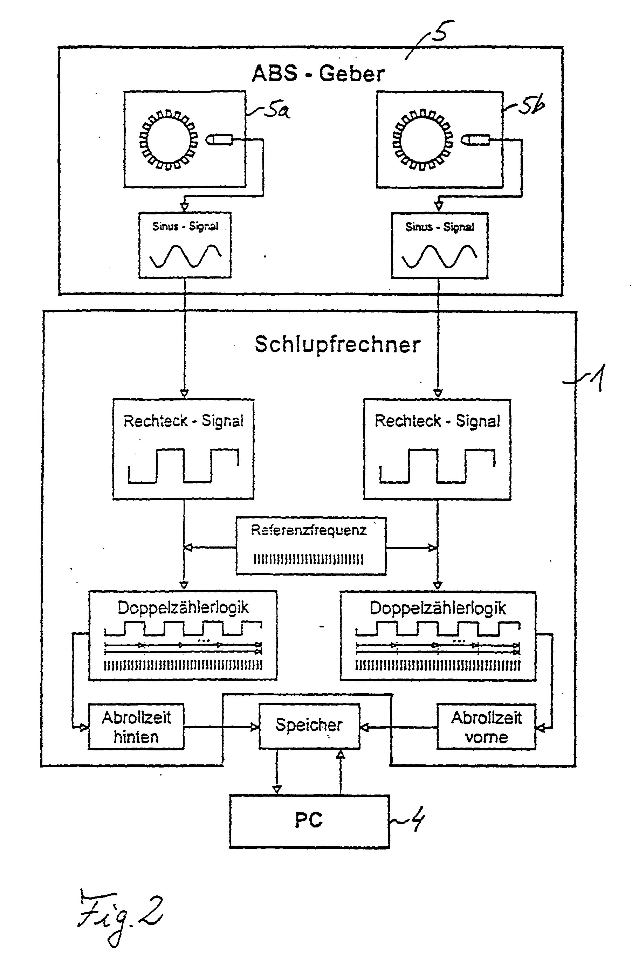

Der Schlupf λ wird durch den Schlupfrechner 1 hochgenau ermittelt, so daß insbesondere auch zuverlässige Reifenumfangskraft-Schlupf-Meßwertpaare im Mikroschlupfbereich, d.h. mit Schlupfbeträgen kleiner als etwa 2%, aufgenommen werden können. Ein hierfür geeigneter Aufbau des Schlupfrechners 1 ist in Fig. 2 genauer dargestellt. Der Schlupfrechner 1 erhält von der Antiblockiersystem-Raddrehzahlsensorik 5, von der in Fig. 2 stellvertretend zwei Meßfühler 5a, 5b schematisch wiedergegeben sind, ein die zugehörige Raddrehzahlinformation enthaltendes, sinusförmiges Signal für jedes Rad. Der Schlupfrechner 1 wandelt diese Signale in Rechtecksignale um und zählt deren Periodendauer mittels einer jeweiligen Doppelzählerlogik anhand einer gegenüber der Rechtecksignalfrequenz wesentlich höheren Referenzfrequenz, die von einer entsprechenden Referenzfrequenzerzeugungseinheit bereitgestellt wird. Durch den Zählvorgang wird die Abrollzeit für das jeweilige Rad ermittelt, wobei in Fig. 2 stellvertretend die Bestimmung der Abrollzeit für ein hinteres, angetriebenes sowie für ein vorderes, nicht angetriebenes Rad veranschaulicht sind. Der Schlupfrechner 1 gibt die Abrollzeitinformationen in den Zwischenspeicher 6, aus dem sie dann vom Auswerterechner 4 ausgelesen werden können. Um eine fehlerfreie Zuordnung eines jeweiligen Reifenumfangskraft-Meßwertes zu einem Schlupf-Meßwert zwecks Bildung des entsprechenden Reifenumfangskraft-Schlupf-Meßwertpaares zu gewährleisten, gibt der Schlupfrechner 1 entsprechende Triggerimpulse an den A/D-Wandler 2 ab.

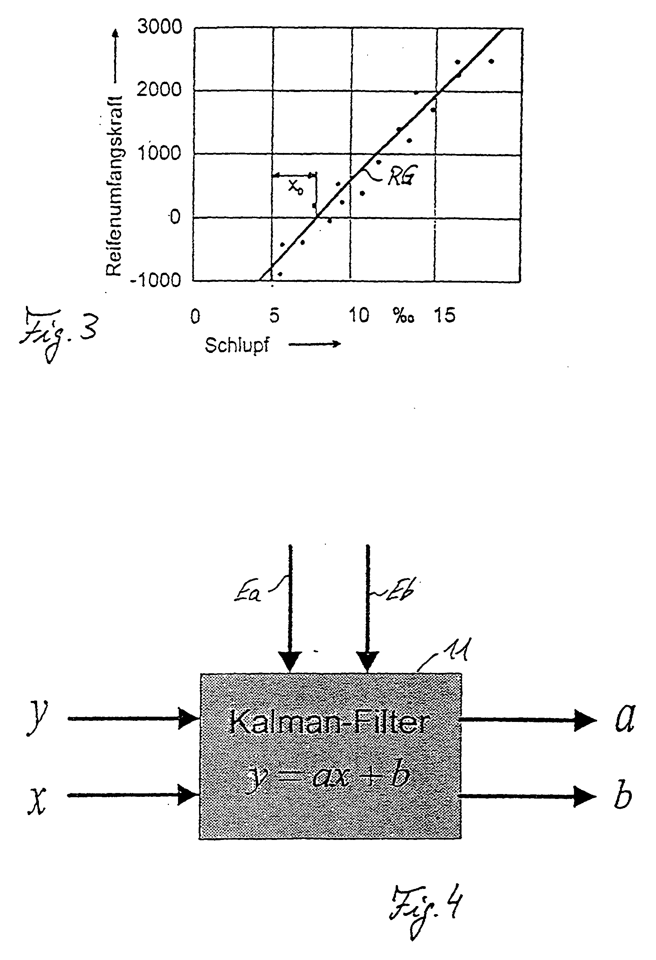

Anhand der Fig. 3 und 4 wird nachfolgend genauer auf die erfindungsgemäße relative Reifenluftdruckbestimmung eingegangen. Beispielhaft im besonders interessierenden Mikroschlupfbereich erhaltene, verschiedene Reifenumfangskraft-Schlupf-Meßwertpaare sind im Reifenumfangskraft-Schlupf-Kennfeld von Fig. 3 als Meßpunkte abgetragen. Zu diesen wie oben beschrieben erfaßten Meßwertpaaren ermittelt der Auswerterechner 4 eine Ausgleichskurve, und zwar speziell in Form einer linearen Regressionsgeraden RG, da der funktionale Zusammenhang von Reifenumfangskraft und Schlupf in diesem Mikroschlupfbereich als in sehr guter Näherung linear angenommen werden kann. Die Ermittlung der Regressiongeraden RG erfolgt mit Hilfe der bekannten Technik der linearen Regression, wozu auf die Literatur verwiesen werden kann.

Je nach Bedarf sind auch andere Methoden zur Ermittlung einer Ausgleichskurve verwendbar. So kann in einer ersten Alternative für ein aktuelles Kraft-Schlupf-Meßwertpaar eine erste Geradengleichung und für ein zweites aktuelles Kraft-Schlupf-Meßwertpaar eine zweite Geradengleichung aufgestellt werden, bei denen jeweils die Steigung und der Achsenabstand die optimierbaren Parameter darstellen. Aus den beiden Geradengleichungen lassen sich die zwei unbekannten Parameter analytisch bestimmen, wobei vorliegend insbesondere der für den gesuchten wahren Kalibrierfaktor k maßgebliche Achsenabschnitt interessiert. Der Berechnungsvorgang wird zweckmäßigerweise laufend wiederholt, und die Ergebnisse werden durch geeignete Filterung geglättet.

Eine weitere Möglichkeit zur Ermittlung der Ausgleichskurve besteht in der Verwendung eines an sich, z.B. aus der Satellitennavigation, bekannten Kalman-Filters 11, wie es in Fig. 4 dargestellt ist und im Auswerterechner 4 implementiert sein kann. Dem Kalman-Filter 11 werden die Reifenumfangskraft- und Schlupf-Meßwerte als Eingangsgrößen x bzw. y zugeführt. Das Kalman-Filter 11 bestimmt dann eine die eingegebenen Meßwertpaare bestapproximierende Ausgleichkurve als Polynom n-ten Grades, wobei vorliegend als einfaches Beispiel n=1, d.h. eine Gerade y=ax+b mit den optimierbaren Parametern Steigung a und y-Achsenabschnitt b gewählt ist. Dabei lassen sich die Filterteile des Kalman-Filters 11 für den Steigungsparameter a und den Achsenabschnittparameter b getrennt über zugehörige Einstellsignale Ea, Eb einstellen. Am Ausgang liefert dann das Kalman-Filter 11 die optimierten Schätzwerte für die Steigung a und den y-Achsenabschnitt b.

Nachdem auf die eine oder andere der oben beschriebenen Arten eine Ausgleichskurve ermittelt wurde, wird deren x-Achsenabschnit $x_0$ bestimmt, wie in Fig. 3 für die Regressionsgerade RG veranschaulicht. Im Fall einer Geraden als Ausgleichskurve ergibt sich mit der Geradengleichung $F=c_1\lambda+c_2$ für den Zusammenhang der Reifenumfangskraft F als Funktion des Schlupfes $\lambda$ mit der optimierten Steigung $c_1$ und dem optimierten y-Achsenabschnitt $c_2$ für den Ausgleichskurven-Offsetwert $x_0$ die Beziehung

$$x_0=-c_2/c_1.$$

Der sich ergebende Offsetwert $x_0$ entspricht einem Scheinschlupf aufgrund einer Dekalibrierung, d.h. Fehlbestimmung, der dynamischen Rollradien der beteiligten Räder und damit des entsprechenden Kalibrierfaktors. Vorausgesetzt ist dabei, daß andere Scheinschlupfeinflüsse, insbesondere der Kurvenfahrteinfluß, eliminiert sind. Der Kurvenfahrteinfluß läßt sich beispielsweise dadurch unterdrücken, daß nur Reifenumfangskraft-Schlupf-Meßwertpaare bei ausreichendem Grad an Geradeausfahrt für die Auswertung herangezogen werden. Alternativ läßt sich der Kurvenfahrteinfluß durch Verwendung einer größeren Zahl von während einer längeren Fahrtstrecke gewonnenen Meßwertpaaren eliminieren, da bei längeren Fahrtstrecken das Fahrzeug im Mittel in sehr guter Näherung geradeaus fährt, so daß sich kurvenfahrtbedingte Abweichungen bei der Ermittlung der Ausgleichskurve herausmitteln. Als weitere Alternative ist es möglich, den jeweiligen Grad an Kurvenfahrt meßtechnisch zu erfassen und den davon verursachten, geometrischen Scheinschlupfanteil zu bestimmen und vom Schlupfmeßwert zu subtrahieren. Mit den obigen Definitionen $\lambda=1-kt_a/t_n$ für den Schlupf $\lambda$ und $k=r_n/r_a$ für den Kalibrierfaktor k läßt sich aus dem Offsetwert $x_0$ ein neuer Kalibrierfaktor $k_{neu}$ anstelle eines bisher verwendeten Kalibrierfaktorwertes $k_{alt}$ durch die Beziehung

$$k_{neu}=k_{alt}/(1-x_0)$$

ableiten, mit dem die Dekalibrierung behoben und dadurch ein Raddrehzahlabgleich zwischen einem angetriebenen und einem nicht angetriebenen Rad realisiert wird. Der neue Kalibrierfaktor $k_{neu}$ gibt den neuen Wert des dynamischen Raddadienverhältnisses kneu =rn /ra an, aus dem wiederum in an sich bekannter Weise auf den relativen Reifendruck der beiden Räder geschlossen werden kann, so daß insbesondere ein übermäßiger Druckverlust des einen relativ zum anderen Rad erkannt werden kann. Hierfür kann z.B. vorgesehen sein, daß der Auswerterechner 4 feststellt, ob sich der Kalibrierwert betraglich um mehr als einen vorgegebenen Grenzwert ändert, was er dann richtigerweise als übermäßigen Reifendruckverlust interpretiert und daraufhin die entsprechende Warnmeldung 10 abgibt. Außerdem zeigt er an, an welchem Rad der Druckverlust vorliegt.

Es zeigt sich, daß mit dem beschriebenen Verfahren schon solche relativen Reifendruckverluste zwischen einem angetriebenen und einem nicht angetriebenen Rad erkannt werden können, die zu einer Schlupfdekalibrierung von nur etwa 0,5 ‰ führen. Daher werden insbesondere bei Lastkraftwagen mit Nenndruckwerten im Bereich von 6 bar bis 8 bar Druckverluste von 10% und mehr sehr zuverlässig erkannt.

Auf der Basis der oben erläuterten relativen Reifendruckbestimmung zwischen einem angetriebenen und einem nicht angetriebenen Rad können je nach Anwendungsfall folgende weitere Maßnahmen durchgeführt werden. Zum einen kann die beschriebene relative Reifendruckbestimmung sowohl für die beiden seitengleichen wie auch für die beiden diagonalen Radpaare eines vierrädrigen Fahrzeugs durchgeführt werden. Jedes Rad ist dadurch zweifach in die relative Reifendruckbestimmung involviert, was die Zuverlässigkeit der Druckbestimmung erhöht. Eine Druckverlustwarnung erfolgt in diesem Fall zweckmäßigerweise immer dann, wenn dies sowohl durch die Druckbestimmung für die seitengleichen als auch die diagonalen Radpaare indiziert ist. Alternativ kann zusätzlich eine Druckbestimmung für die achsgleichen Radpaare vorgesehen sein und eine Druckverlustwarnung erst erfolgen, wenn dies auch durch diese Druckbestimmung für die achsgleichen Radpaare indiziert ist. Zum anderen kann, wie oben erwähnt, durch Anbringen eines absoluten Drucksensors an wenigstens einem Fahrzeugrad der Reifendruck an diesem Rad absolut gemessen und anhand dieses Referenzwertes aus den ermittelten relativen Reifendruckwerten absolute Druckwerte für alle Fahrzeugräder gewonnen werden. Weiter besteht die Möglichkeit einer achsweisen Kalibrierung der Raddrehzahlen. Der Kurvenfahrteinfluß kann dabei geeignet eliminiert werden, wie oben beschrieben, z.B. durch eine gleitende Mittelwertbildung der ermittelten achsgleichen Raddrehzahlen über einen ausreichend langen Mittelungszeitraum. Da ein Reifendruckverlust im Gegensatz zu einer Kurvenfahrt über einen längeren Zeitraum hinweg auftritt, kann er auf diese Weise problemlos von Kurvenfahrteinflüssen unterschieden werden. Alternativ können die kurvenfahrtbedingten, gleichsinnigen Änderungen des Radradienverhältnisses an Vorder- und Hinterachse und dadurch der Grad an Kurvenfahrt detektiert werden, um dann die in der jeweiligen Fahrphase gewonnenen Ergebnisse je nach Maß an Kurvenfahrt stärker oder schwächer zu gewichten.

Ein weiterer Anwendungsfall berücksichtigt den Einfluß der Fahrzeugdynamik. Für die achsweise Kalibrierung ist relativ wenig Querdynamik, für die gleichseitige Kalibrierung hingegen relativ viel Längsdynamik von Nutzen. Basierend auf dieser Tatsache lassen sich Dynamikfaktoren zur Bewertung der Fahrzeuglängs- und Fahrzeugquerdynamik entwickeln, um den achsweisen bzw. den gleichseitigen Raddrehzahl-Kalibrieralgorithmus geeignet zu steuern. Die Längsdynamik läßt sich aus der Fahrzeugbeschleunigung, wie sie z.B. aus den Raddrehzahlsignalen abgeleitet werden kann, und der Antriebskraftänderung bestimmen. Die Querdynamik bestimmt sich aus der Häufigkeit von Kurven in einem bestimmten Zeitabschnitt.

Des weiteren ist eine Berücksichtigung der Radlast möglich. Eine Radlaständerung bewirkt gleichsinnige Änderungen des Radradienverhältnisses sowohl für die gleichseitigen Radpaare als auch für die diagonalen Radpaare. Untersuchungen zeigen außerdem, daß die Steigung $c_1$ der Reifenumfangskraft-Schlupf-Kurve in guter Näherung proportional zur Radlast ist. Durch Beobachtung dieses Zusammenhangs ist anhand der Ermittlung der Steigung $c_1$ der Reifenumfangskraft-Schlupf-Ausgleichskurve eine Radlastbestimmung möglich, so daß dann auch der Einfluß der Radlaständerung auf die Reifendruckbestimmung eliminiert werden kann. Zu beachten ist dabei, daß die achsweisen Kalibrierwerte von einer Radlaständerung nicht beeinflußt werden. Bei Bedarf kann das vorliegende System um einen sogenannten Systembeobachter ergänzt werden, z.B. in Form eines Fuzzy-Control-Moduls. Dieser Beobachter beobachtet alle ihm zugeführten Eingangsgrößenwerte und löst eine Reifendruckverlust-Warnmeldung erst bei einer sich aus den Eingangsgrößenwerten eindeutig ergebenden Tendenz und nach einer Redundanzprüfung aus. Störgrößen und Systemzustandsschwankungen lassen sich dadurch eliminieren, was die Genauigkeit und Zuverlässigkeit des Systems erhöht.

**Patentansprüche**

1. Verfahren zur Überwachung des Reifenluftdrucks von Rädern eines Kraftfahrzeuges, bei dem

   - im laufenden Fahrbetrieb für wenigstens ein angetriebenes Rad der Schlupf ($\lambda$) sowie die zugehörige Reifenumfangskraft (F) in Form jeweiliger Reifenumfangskraft-Schlupf-Meßwertpaare erfaßt werden und
   - zu erfaßten Reifenumfangskraft-Schlupf-Meßwertpaaren eine Ausgleichskurve (RG) ermittelt wird,

   **dadurch gekennzeichnet, daß**

   - der Offsetwert ($x_0$) der ermittelten Ausgleichskurve bezüglich des Nullpunktes im Reifenumfangskraft-Schlupf-Kennfeld ermittelt wird und
   - aus dem Offsetwert auf das zugehörige Radradienverhältnis ($r_n/r_a$) zwischen wenigstens einem nicht angetriebenen und einem angetriebenen Rad geschlossen und daraus der relative Reifenluftdruck der Räder bestimmt wird.

2. Verfahren nach Anspruch 1, weiter **dadurch gekennzeichnet, daß** die Ausgleichskurve als eine Gerade durch zwei erfaßte Reifenumfangskraft-Schlupf-Meßwertpaare oder als eine Näherungsgerade (RG) für mehr als zwei erfaßte Reifenumfangskraft-Schlupf-Meßwertpaare ermittelt wird, wobei als Meßwertpaare solche aus einem Mikroschlupfbereich mit Schlupfwerten kleiner als etwa 2% herangezogen werden.

3. Verfahren nach Anspruch 1 oder 2, weiter **dadurch gekennzeichnet, daß** der relative Reifenluftdruck bei einem Kraftfahrzeug mit auf einer ersten Achse angetriebenen Rädern und auf einer zweiten Achse nicht angetriebenen Rädern sowohl für die jeweils seitengleichen als auch für die diagonal gegenüberliegenden Radpaare bestimmt wird.

4.  Verfahren nach einem der Ansprüche 1 bis 3, weiter **dadurch gekennzeichnet, daß** an wenigstens einem Rad der absolute Reifenluftdruck direkt gemessen und als Referenzdruckwert für den für wenigstens ein anderes Rad ermittelten relativen Reifenluftdruckwert benutzt wird.

5.  Verfahren nach einem der Ansprüche 1 bis 4, weiter **dadurch gekennzeichnet, daß** die Steigung ($c_1$) der ermittelten Ausgleichskurve ermittelt wird und daraus auf die Radlast geschlossen wird.

6.  Vorrichtung zur Bestimmung des Reifenluftdrucks von Rädern eines Kraftfahrzeuges, mit

    -   Mitteln (1, 3, 4, 5, 7) zur Erfassung des Schlupfes ($\lambda$) und der zugehörigen Reifenumfangskraft (F) in Form jeweiliger Reifenumfangskraft-Schlupf-Meßwertpaare für wenigstens ein angetriebenes Rad im laufenden Fahrbetrieb,

    **gekennzeichnet durch**

    -   eine Auswerteeinheit (4), die zu wenigstens einem Teil der erfaßten Reifenumfangskraft-Schlupf-Meßwertpaare eine Ausgleichskurve (RG) sowie deren Offsetwert ($x_o$) bezüglich des Nullpunktes im Reifenumfangskraft-Schlupf-Kennfeld und/oder deren Steigung ($c_1$) ermittelt und aus dem ermittelten Offsetwert auf das zugehörige Radradienverhältnis ($r_n/r_a$) zwischen einem nicht angetriebenen Rad und dem wenigstens einen angetriebenen Rad schließt und daraus den relativen Reifenluftdruck der Räder bestimmt und/oder aus der ermittelten Steigung die Radlast bestimmt.

7.  Vorrichtung nach Anspruch 6, weiter **dadurch gekennzeichnet, daß**

    -   eine Reifendrucksensorik (8) vorgesehen ist, die den Reifenluftdruck eines Teils der Fahrzeugräder mißt und
    -   die Auswerteeinheit (4) den von der Reifendrucksensorik (8) am jeweiligen Rad gemessenen absoluten Reifenluftdruck als Referenzdruckwert zur Bestimmung des absoluten Reifenluftdrucks für wenigstens ein anderes Rad anhand des für dieses ermittelten relativen Reifenluftdruckwertes benutzt.

**Claims**

1.  Method for monitoring the tyre pressure of wheels of a motor vehicle, whereby

    -   while the vehicle is running, the wheel slip ($\lambda$) and the associated circumferential force (F) of the tyre are detected for at least one driven wheel in the form of respective circumferential force/slip value pairs and
    -   a regression curve (RG) is determined for detected circumferential force/slip value pairs,

    **characterised in that**

    -   the offset value ($x_0$) of the determined regression curve is determined with regard to the zero point in the circumferential force/slip characteristic, and **in that**
    -   from the offset value, the associated wheel radius ratio ($r_n/r_a$) between at least one non-driven and one driven wheel is inferred and the relative tyre pressure of the wheels is determined therefrom.

2.  Method according to claim 1, further **characterised in that** the regression curve is determined as a straight line through two detected circumferential force/slip value pairs or as an approximate straight line (RG) for more than two detected circumferential force/slip value pairs, whereby value pairs are selected from a microslip range with slip values below approximately 2%.

3.  Method according to claim 1 or 2, further **characterised in that** the relative tyre pressure of a vehicle with driven wheels on a first axle and non-driven wheels on a second axle is determined both for the wheel pairs located on the same side and for the wheel pairs located diagonally opposite one another.

4.  Method according to any of claims 1 to 3, further **characterised in that** the absolute type pressure is directly measured on at least one wheel and used as reference pressure for the relative tyre pressure value determined for at least one other wheel.

5.  Method according to any of claims 1 to 4, further **characterised in that** the slope ($c_1$) of the determined regression curve is determined and the wheel load is inferred therefrom.

6.  Device for the determination of the tyre pressure of wheels of a motor vehicle, comprising

    -   means (1, 3, 4, 5, 7) for the detection of the slip ($\lambda$) and the associated circumferential force (F) of the tyre in the form of circumferential force/ slip value pairs for at least one driven wheel while the vehicle is running,

**characterised by**

- an evaluation unit (4) which determines, for at least part of the detected circumferential force/ slip value pairs, a regression curve (RG) and its offset value $(x_0)$ with regard to the zero point in the circumferential force/slip characteristic and/or its slope $(c_1)$, infers, from the determined offset value, the associated wheel radius ratio $(r_n/r_a)$ between a non-driven wheel and the at least one driven wheel and determines therefrom the relative tyre pressure of the wheels and/or determines the wheel load from the determined slope.

7. Device according to claim 6, further **characterised in that**

- a tyre pressure sensor system (8) measuring the tyre pressure of part of the vehicle wheels is provided, and **in that**
- the evaluation unit (4) uses the absolute tyre pressure measured by the tyre pressure sensor system (8) on the relevant wheel as a reference pressure value for the determination of the absolute tyre pressure for at least one other wheel by means of the relative tyre pressure value determined for that wheel.

**Revendications**

1. Procédé pour le contrôle de la pression de gonflage des roues d'un véhicule automobile, dans lequel

- en mode de roulement continu et pour au moins une roue entraînée, le glissement $(\lambda)$ et la force périphérique spécifique des pneus (F) sont enregistrés sous la forme de couples de valeurs de mesure force périphérique des pneus-glissement et
- une courbe d'équilibre (RG) est déterminée pour des couples de valeurs de mesure force périphérique des pneus-glissement enregistrées,

   **caractérisé en ce que**

- la valeur de décalage $(X_0)$ de la courbe d'équilibre déterminée par rapport au point zéro est déterminée dans le champ caractéristique force périphérique des pneus-glissement et
- à partir de la valeur de décalage, on tire des conclusions sur le rapport de rayons de roue

$(r_n/r_a)$ spécifique entre au moins une roue non entraînée et une roue entraînée et à partir de là, on calcule la pression de gonflage relative des roues.

2. Procédé selon la revendication 1, également **caractérisé en ce que** la courbe d'équilibre est déterminée comme une droite par deux couples de valeurs de mesure force périphérique des pneus-glissement enregistrés ou comme une droite d'approximation (RG) pour plus que deux couples de valeurs de mesure force périphérique des pneus-glissement enregistrés, ces valeurs mesurées étant utilisées comme couples de valeurs de mesure à partir d'une plage de microglissement avec des valeurs de glissement inférieures à environ 2 %.

3. Procédé selon la revendication 1 ou 2, également **caractérisé en ce que** la pression de gonflage relative est déterminée sur un véhicule avec des roues entraînées sur un premier axe et des roues non entraînées sur un second axe aussi bien pour les paires de roues respectivement situées sur le même côté que pour les couples de roues opposés en diagonal.

4. Procédé selon l'une quelconque des revendications 1 à 3, également **caractérisé en ce que** la pression de gonflage absolue est mesurée directement sur au moins une roue et une valeur relative de pression de gonflage déterminée pour au moins une autre roue est utilisée comme valeur de pression de référence.

5. Procédé selon l'une quelconque des revendications 1 à 4, **caractérisé en ce que** la pente $(C_1)$ de la courbe d'équilibre déterminée est calculée et des conclusions sont tirées à partir de là sur la charge de roue.

6. Dispositif pour déterminer la pression de gonflage de roues d'un véhicule automobile avec

- des moyens (1, 3, 4, 5, 7) pour l'enregistrement du glissement $(\lambda)$ et de la force périphérique des pneus (F) spécifique sous la forme de couples de valeurs de mesure force périphérique des pneus-glissement pour au moins une roue entraînée en mode de roulement continu

   **caractérisé par**

- une unité d'analyse (4), qui détermine pour au moins une partie des couples de valeurs de mesure force périphérique des pneus-glissement enregistrés une courbe d'équilibre (RG) et sa valeur de décalage $(x_0)$ par rapport au point zéro dans le champ caractéristique force périphérique des pneus-glissement et/ou sa pente (ci) et à partir de la valeur de décalage calculée, on tire des conclusions sur le rapport de rayons de roue ($r_n/r_a$) spécifique entre une roue non entraînée et la au moins une roue entraînée et on calcule sur cette base la pression de gonflage relative des roues et/ou on calcule la charge sur la roue à partir de la pente calculée.

**7.** Dispositif selon la revendication 6, également **caractérisé en ce que**

- un capteur de pression de pneumatique (8) est prévu, qui mesure la pression de gonflage d'une partie des roues du véhicule et
- l'unité d'analyse (4) utilise la pression de gonflage absolue mesurée par le capteur de pneumatique (8) sur la roue concernée comme valeur de pression de référence pour la détermination de la pression de gonflage absolue pour au moins une autre roue à l'aide de la valeur de la pression de gonflage relative déterminée.

Fig. 1

Fig. 2

Fig. 3

Fig. 4